# FASCICULE DE BREVET EUROPEEN

(11) **EP 1 980 844 B1**
(45) Date de publication et mention de la délivrance du brevet: **10.07.2013**
(21) Numéro de dépôt: 08154254.0
(22) Date de dépôt: 09.04.2008
(51) Int. Cl.: G01N 22/00, G01N 27/02, G01N 27/22

(54) **Analyse de la composition du contenu d'un récipient par mesure des caractéristiques diélectriques complexes à plusieurs fréquences échantillonnées sur la plage d'excitation de quelques Hz à plusieurs GHz et par mesure de la masse du récipient avec son contenu**
Analyse der Zusammensetzung eines Gefäßinhalts durch Messen komplexer dielektrischer Eigenschaften bei mehreren Frequenzen im Bereich von einigen Hz bis mehreren GHz und durch Messen der Masse des Gefässes samt Inhalt
Analysing the composition of the content of a container by measuring the complex dielectric properties at plural frequences selected from the range of several Hz to plural GHz and by measuring additionally the mass of the container with its content

(30) Priorité: 12.04.2007 FR 0754440
(43) Date de publication de la demande: 15.10.2008
(73) Titulaire: Manneschi, M. Alessandro, 52100 Arezzo (IT)
(72) Inventeur: Manneschi, Alessandro, I-52100, AREZZO (IT)
(74) Mandataire: Regimbeau

(56) Documents cités:
- EP-A- 1 712 900
- WO-A-00/14552
- GB-A- 1 392 708
- US-A- 4 319 491
- US-A- 4 403 191
- US-A- 4 485 284
- US-A1- 2002 050 828
- KLOCK B A: "Usability assessment of a bottle content tester for use in airports by screeners" SECURITY TECHNOLOGY, 2000. PROCEEDINGS. IEEE 34TH ANNUAL 2000 INTERNATIONAL CARNAHAN CONFERENCE ON OCTOBER 23-25, 2000, PISCATAWAY, NJ, USA,IEEE, 23 octobre 2000 (2000-10-23), pages 174-177, XP010527860 ISBN: 0-7803-5965-8
- EBBE NYFORS AND PERTTI VAINIKAINEN: "INDUSTRIAL MICROWAVE SENSORS", INDUSTRIAL MICROWAVE SENSORS, XX, XX, 1 January 1989 (1989-01-01), XP002334964,
- 'Dielectric Analysis of Pharmaceutical Systems', 01 Janvier 1995, TAYLOR & FRANCIS Bd. DUNCAN Q. M. CRAIG: 'LOW FREQUENCY METHODS', pages 36 - 38, XP055045345

## Description

La présente invention concerne le domaine de l'analyse de la composition du contenu de récipients tels que des bouteilles.

La présente invention peut trouver de nombreuses applications. Elle peut s'appliquer notamment au contrôle de fabrication dans des usines d'embouteillage pour éviter toute malversation sur le contenu de récipients fournis ultérieurement au grand public. L'invention peut également s'appliquer au contrôle de bagages transportés par des passagers en particulier des bagages à main conservés par des passagers dans les aéroports.

### ETAT DE LA TECHNIQUE

Les moyens d'examen par rayons X, bien connus, ne permettent pas de déterminer le contenu de bouteilles ou récipients équivalents. De tels moyens d'examen permettent en effet seulement le classement en deux catégories, matériaux organiques et non organiques. Ils ne permettent pas de distinguer entre eux deux matériaux organiques.

Pour palier cet inconvénient, un dispositif d'analyse de la composition du contenu d'un récipient a été développé.

Ce dispositif comprend des moyens émetteurs/récepteurs d'un champ électromagnétique à au moins plusieurs fréquences comprises dans une plage de fréquences déterminée, des moyens support d'un récipient dont le contenu doit être analysé, adaptés pour assurer un positionnement précis relatif entre les moyens émetteurs/récepteurs et le récipient, des moyens aptes à mesurer l'impédance complexe des moyens émetteurs/récepteurs influencés par la charge constituée par le récipient et son contenu, représentative des caractéristiques diélectriques complexes du récipient et de son contenu, et des moyens aptes à fournir une information liée à l'impédance complexe mesurée et en conséquence à la nature du contenu dudit récipient.

Un avantage de ce dispositif est qu'il permet la détection du contenu d'un récipient avec une grande fiabilité.

Un but de l'invention est de proposer un dispositif permettant d'améliorer la fiabilité du dispositif précité.

Le document GB 1 392 708 décrit un dispositif pour la détermination de la teneur en eau dans des matériaux comme du tabac, une poudre, un matériau granulé ou dans une bobine de fil. Le matériau est placé sur un support entre les armatures d'un transducteur capacitif et la capacité est déterminée par exemple par un oscillateur, dont la fréquence dépend de la capaté, ou par un circuit en pont. Le support est fixé sur une jauge de déformation en dehors du champ de la capacité. Cette jauge génère un signal dépendant de la masse. La teneur en eau est calculée à partir de la capacité et de la masse.

### RESUME DE L'INVENTION

On propose à cet effet, selon un dispositif d'analyse conforme à la revendication 1.

Des aspects préférés, mais non limitatifs du dispositif selon l'invention sont les suivants :
- les moyens pour l'obtention des données physiques additionnelles comprennent un capteur gravimétrique pour la mesure de la masse du récipient et de son contenu ;
- le capteur gravimétrique est disposé sous les moyens support du récipient ;
- la tare du dispositif est mesurée périodiquement par le capteur gravimétrique lorsque aucun récipient n'est introduit dans le support ;
- la présence d'un récipient sur le support est détectée par les moyens aptes à mesurer l'impédance complexe des moyens émetteurs/récepteurs ;
- les données physiques additionnelles comprenant la capacité du récipient et/ou l'épaisseur des parois du récipient ;
- la donnée physique additionnelle est saisie grâce aux moyens de saisie en sélectionnant des caractéristiques de récipients parmi une liste prédéterminée de caractéristiques de récipients.

### PRESENTATION DES FIGURES

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective d'un dispositif d'analyse conforme à un premier mode de réalisation de la présente invention,
- la figure 2 représente une vue schématique sous forme de blocs fonctionnels des éléments essentiels composant ce dispositif,
- la figure 3 représente la partie réelle et la partie imaginaire de l'impédance complexe mesurée dans le cas d'une charge composée d'eau, sur une large plage de fréquences,
- les figures 4 et 5 représentent deux vues schématiques en perspective de variantes du dispositif représenté sur la figure 1,
- les figures 6, 7 représentent deux variantes de réalisation de capteurs électromagnétiques émetteurs/récepteurs conformes à la présente invention, et
- les figures 8a et 8b représentent une troisième variante de réalisation, de capteurs électromagnétiques émetteurs/récepteurs conformes à la présente invention
- les figures 9a et 9b, et 10a et 10b représentent des variantes de réalisation de l'invention utilisées pour l'analyse de récipients de volumes variables,
- la figure 11 illustre un mode de réalisation de moyens de visualisation et de saisie du dispositif.

### DESCRIPTION DE L'INVENTION

La présente invention repose essentiellement sur l'approche suivante.

Les matériaux diélectriques présentent quatre polarisations de base : électronique, ionique, de dipôle et migrationnelle.

Chaque type de polarisation est caractérisé par un temps de mise en place, appelé temps de montée. Si le champ électromagnétique d'excitation a une pulsation supérieure à l'inverse du temps de montée, la polarisation ne peut pas se réaliser. Par conséquent, la polarisation est présente uniquement aux fréquences inférieures à celles de coupure et est absente aux fréquences supérieures. Dans la zone de transition, on assiste à un phénomène de perte d'énergie dans le diélectrique dû à la rotation des molécules déphasées vis à vis du champ d'excitation.

Les temps de montée pour la polarisation électronique sont de 10⁻¹⁴ à 10⁻¹⁵ secondes, c'est-à-dire dans le domaine optique. Une telle gamme de fréquences est difficilement exploitable à l'échelle industrielle car les bouteilles à examiner peuvent être fréquemment partiellement ou complètement opaques.

La polarisation ionique a des temps de montée compris entre 10⁻¹³ et 10⁻¹⁴ secondes, très proche des temps de relaxation électronique. Elle est donc également difficilement exploitable.

La polarisation de dipôle est caractéristique des diélectriques polaires (comme par exemple l'eau).

La polarisation de dipôle, au contraire des polarisations électroniques et ioniques, qui sont sans inertie, persiste pour un certain temps après l'extinction d'une excitation. La polarisation de dipôle diminue avec une loi exponentielle et une constante de temps, appelée temps de relaxation, comprise entre 10⁻⁶ et 10⁻¹¹ secondes, c'est-à-dire dans le domaine des fréquences radio. Les ondes électromagnétiques ayant ces fréquences peuvent traverser le verre, la matière plastique et d'autres matériaux diélectriques. La Demanderesse a ainsi déterminé que les ondes électromagnétiques peuvent être utilisées pour l'examen du contenu de bouteilles ou récipients équivalents.

La polarisation migrationnelle est présente dans certains diélectriques, en particulier dans les matériaux hétérogènes, qui contiennent des impuretés. Dans ce cas, les charges se déplacent très lentement et le temps de montée peut être de plusieurs secondes, minutes, voire parfois heures. Ce type de polarisation par conséquent n'est mesurable qu'à très basse fréquence.

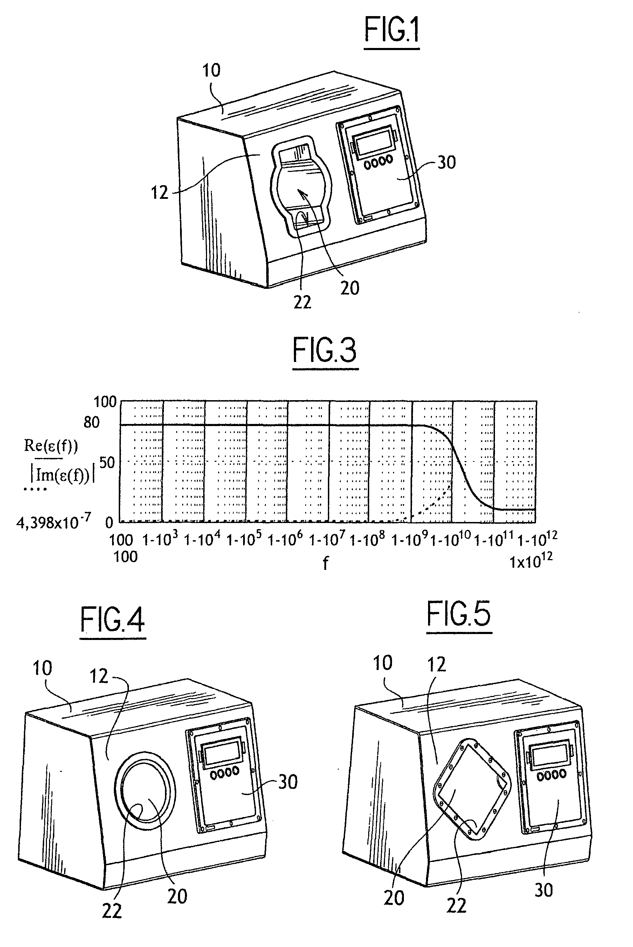

L'eau qui est un liquide polaire, et par conséquent les liquides à base d'eau, présentent un temps de relaxation de l'ordre de 10⁻¹¹ secondes à température ambiante, correspondant à une fréquence d'environ 16 GHz. La mesure de la constante diélectrique complexe à fréquence plus basse que celle de relaxation montre une partie réelle élevée et des pertes limitées (eau distillée) comme l'illustre la figure 3 annexée.

Les hydrocarbures saturés CnH(2n+2) sont des molécules non polaires ou avec un moment de dipôle électrique très bas, par conséquent, ils ne présentent pas un phénomène de polarisation de dipôle et la valeur de la partie réelle de la constante diélectrique est basse (constante diélectrique relative de l'ordre de 2). Les pertes dans les hydrocarbures sont négligeables jusqu'à des fréquences très élevées. Si une molécule d'hydrocarbure perd sa symétrie comme, par exemple, dans le cas de l'alcool éthylique ou méthylique, on assiste à la parution d'un moment de dipôle électrique et, par conséquent, à une constante supérieure à celle obtenue dans le cas des hydrocarbures, et à un phénomène de résonance à la fréquence de relaxation dipolaire.

Les phénomènes physiques décrits ci-dessus sont connus depuis la fin des années 30 (voire par exemple Peter Debye Nobel Lecture, 1936).

Cependant, ils n'ont pas jusqu'ici été mis en oeuvre pour l'analyse efficace du contenu de récipients.

On a représenté sur la figure 1, le boîtier d'un dispositif d'analyse conforme à la présente invention.

La géométrie générale de ce boîtier peut faire l'objet de nombreuses variantes de réalisation et ne sera donc pas décrite dans le détail par la suite.

De préférence, ce boîtier comprend un carter 10 métallique pour former un blindage autour du capteur électromagnétique conforme à la présente invention vis à vis de l'environnement extérieur.

De préférence, ce carter définie une cavité 20 dont la partie inférieure 22 présente une concavité dirigée vers le haut, conçue pour recevoir un récipient à analyser et garantir un positionnement précis de ce dernier par rapport aux moyens émetteurs/récepteurs de champ électromagnétique conformes à l'invention.

Plus précisément encore, de préférence, dans le cadre de la présente invention, la cavité 20 précitée est formée d'un canal de section droite constante dont les génératrices sont inclinées vers le bas en éloignement de la face avant ouverte 12 par laquelle un récipient est introduit.

La face arrière de cette cavité ou canal 20 est de préférence fermée pour éviter que le récipient analysé ne glisse sur le fond 22.

La section droite du canal 20 peut faire l'objet de nombreuses variantes. On a représenté sur la figure 1, une première variante selon laquelle le canal 20 possède une section droite en forme de trou de serrure comprenant une partie centrale cylindrique prolongée par deux excroissances diamétralement opposées de contour globalement rectangulaire. Les avantages des différentes variantes de sections droites seront explicités dans la suite.

On a représenté sur la figure 4, une variante de réalisation selon laquelle le canal 20 présente une section droite circulaire. On a représenté sur la figure 5 annexée, une autre variante de réalisation selon laquelle le canal 20 possède une section droite carrée, voire rectangulaire, dont les diagonales sont respectivement verticale et horizontale de sorte qu'une arête coïncide avec le point le plus bas du canal 20.

Comme on le voit sur les figures 1, 4 et 5 annexées, le boîtier 10 comporte en outre de préférence un pupitre de contrôle 30 équipé d'un clavier de saisie et/ou de programmation, d'un afficheur et de moyens de signalisation (lumineux et/ou sonore) de présence réseau et d'alarme. A cet égard, l'invention n'est bien entendu pas limitée aux modes de réalisation particuliers représentés sur les figures annexées.

De préférence, la cavité 20 est enrobée par un revêtement de protection plastique.

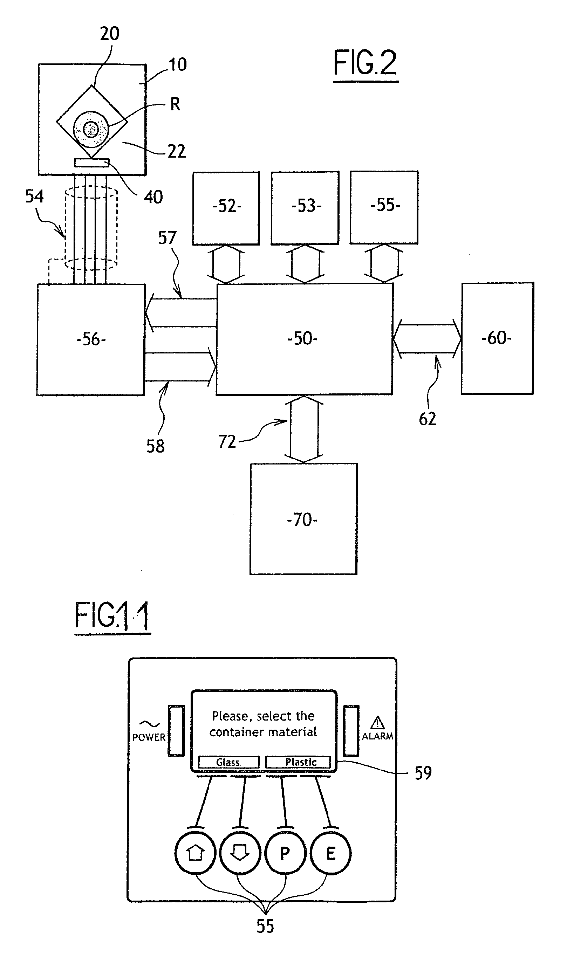

Comme on l'a illustré sur la figure 2 sur laquelle on a schématisé sous la référence R un récipient à analyser et sur laquelle on retrouve le fond 22 de la cavité 20, de préférence le capteur ou les capteurs électromagnétiques destiné(s) à mesurer les caractéristiques diélectriques complexes de la bouteille R et de son contenu sont placés autour de la cavité 20.

Ces moyens émetteurs/récepteurs de champ électromagnétique, sont formés de préférence d'un ou plusieurs transducteurs (antennes) 40 relié(s), par l'intermédiaire d'un réseau de connexion 54, d'un réseau électromagnétique de mesure 56 et de bus 57, 58, à un générateur 50, conçus pour émettre une onde électromagnétique. Typiquement le générateur 50 est adapté pour couvrir la plage de fréquences allant de quelques Hz, par exemple 5Hz à quelques GHz, par exemple 20 ou 50 GHz. Le générateur 50 est mis en oeuvre, soit manuellement par un opérateur lorsque celui-ci introduit un récipient R dans le canal 20, soit automatiquement sous l'effet d'un capteur 52 conçu pour détecter la présence d'un récipient R dans le canal 20.

Les moyens 50 sont conçus par ailleurs pour mesurer l'impédance complexe des moyens émetteurs 40 influencée par la charge constituée par le récipient R et son contenu, représentative des caractéristiques diélectriques complexes de ce récipient R et de son contenu. Plus précisément, les moyens 50 sont conçus pour mesurer cette impédance complexe à plusieurs fréquences échantillonnées sur la plage d'excitation précitée de quelques Hz à plusieurs GHz. Typiquement, les moyens 50 opèrent ainsi sur un nombre de fréquences compris entre 10 et 50, avantageusement sur une trentaine de fréquences.

Par ailleurs, les moyens 50 sont adaptés pour fournir une information liée à l'impédance complexe mesurée et à la nature du contenu du récipient détecté en conséquence.

De préférence, ces moyens 50 sont adaptés pour comparer l'impédance complexe ainsi mesurée avec des valeurs de référence prédéterminées pour la même plage de fréquences et à générer une alarme lorsque l'impédance complexe mesurée s'écarte des valeurs de référence.

On a représenté sur la figure 2, une mémoire 60 couplée aux moyens d'analyse 50 par un bus de communication 62, et dans laquelle peuvent être mémorisées les valeurs de référence prédéterminées sur la plage de fréquence de travail. On a par ailleurs représenté sur la même figure 2 sous la référence 70, des moyens d'alarme, présents de préférence sur le pupitre de contrôle 30, reliés aux moyens 50 par un bus de communication 72 et adaptés pour générer une alarme sonore et/ou visuelle, lorsque l'impédance complexe mesurée s'écarte des valeurs de référence.

En variante, les valeurs de référence peuvent être calculées par les moyens 50 et non pas contenues dans une mémoire 60.

Par ailleurs, selon une autre variante, les moyens 70 peuvent être adaptés pour indiquer directement la nature du contenu du récipient R ou au moins la famille de ce contenu à la place de ou en complément des moyens d'alarme précités.

Les moyens 40 émetteurs/récepteurs de champ électromagnétique peuvent faire l'objet de nombreux modes de réalisation.

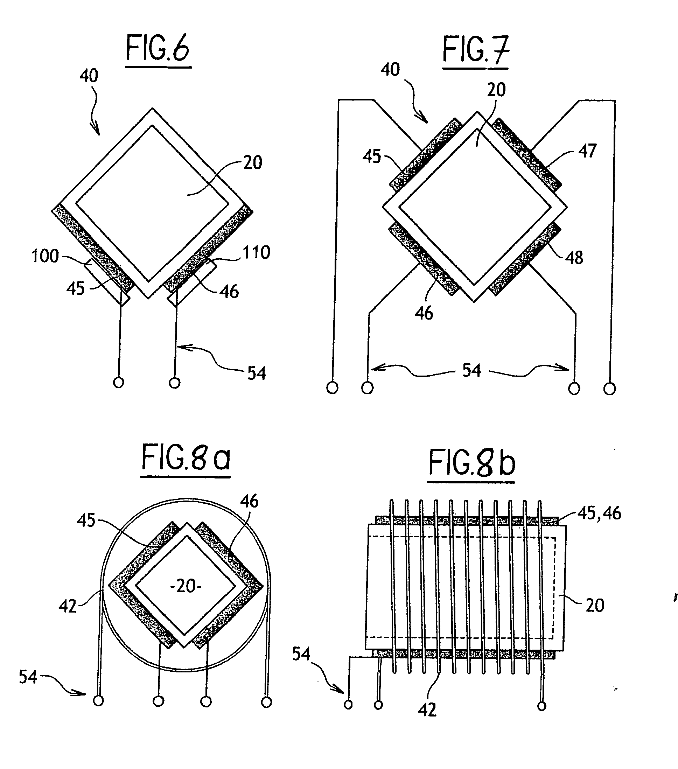

La figure 6 illustre un premier mode de réalisation dans lequel les moyens 40 sont formés de deux armatures 45, 46 d'une capacité entourant la cavité 20 destinée à recevoir le récipient R et reliés par un réseau 54 à deux fils aux moyens 56.

La figure 7 illustre une variante de la figure 6 dans laquelle les moyens 40 comprennent (deux) six capacités croisées composées de quatre armatures 45, 46, 47, 48, reliées par un réseau 54 à quatre fils aux moyens 56 et formant respectivement, et le cas échéant alternativement, émetteur et récepteur.

Par ailleurs, dans le cadre de la présente invention, comme illustré sur les figures 8a et 8b, on peut utiliser des capteurs mettant en oeuvre simultanément un transducteur inductif 42 et un transducteur capacitif 45, 46. Cette disposition permet de déceler que la croissance de la partie réelle de la constante diélectrique complexe est due à une armature métallique interne au récipient et non à un ou des liquides ayant des propriétés particulières. Cette disposition permet ainsi de déceler la présence d'écrans métalliques susceptibles de former blindage perturbant la mesure. Le capteur inductif 42 alimenté par une source de courant alternatif produira, dans ce cas, des courants de Foucault dans la partie métallique. Ces courants seront mesurés par le dispositif de traitement. Et la comparaison des signaux provenant du transducteur de champ électrique 45, 46 et du transducteur de champ magnétique 42 permet une détection satisfaisante.

Bien entendu, le nombre de moyens composant les émetteurs et/ou récepteurs n'est aucunement limité et peut être supérieur à ceux illustrés sur les figures annexées.

L'homme de l'art comprendra à la lecture de la description détaillée qui précède, que la présente invention propose ainsi un capteur électromagnétique à balayage de fréquences élevées qui permet de mesurer les caractéristiques diélectriques de la bouteille R et de son contenu.

Une fois que l'objet R à analyser est positionné dans la cavité 20, le générateur 50 est activé, soit manuellement, soit automatiquement, et l'impédance complexe du réseau formé par le circuit d'émission/réception 40 influencée par le récipient R et son contenu est mesurée.

L'impédance mesurée dépend du circuit de transmission/réception et de la charge, représentée par la bouteille examinée. Cette impédance complexe est composée par une partie réelle, liée aux pertes (conductibilité) dans l'objet R analysé et d'une partie imaginaire, liée aux caractéristiques diélectriques.

La mesure de l'impédance est effectuée à différentes fréquences dans la plage déterminée.

Tous les liquides comestibles à base d'eau, comme des boissons sans alcool, le vin et les liqueurs sont bien identifiables par leurs caractéristiques diélectriques polaires, avec une constante diélectrique élevée et des pertes situées entre un minimum et une valeur prédéterminée. Une valeur différente de celle typique des liquides comestibles sera par conséquent détectée et provoquera une alarme acoustique et/ou visuelle, plus le cas échéant des messages éventuels sur l'afficheur, ou encore, selon la variante retenue, directement l'indication de la nature du contenu détecté.

Comme décrit précédemment, la section droite du canal 20 peut faire l'objet de nombreuses variantes. Par exemple, la section droite peut être en forme de trou de serrure comme illustré à la figure 1, la section droite peut également être de forme circulaire comme illustré à la figure 4, ou de forme carrée voire rectangulaire (à diagonales verticales et horizontales) comme illustré à la figure 5.

Pour certaines géométries de la section droite du canal, l'impédance complexe mesurée peut varier en fonction du volume du récipient dans lequel un même liquide analysé est contenu.

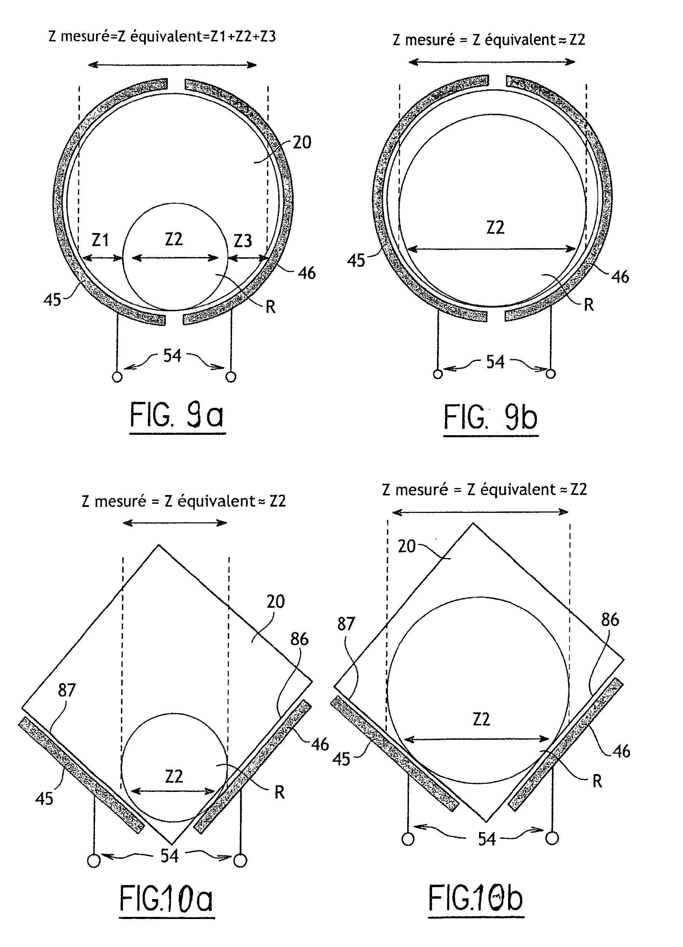

Ainsi, dans le cas d'un canal 20 dont la section droite est de forme circulaire tel qu'illustré aux figures 9a et 9b, l'impédance complexe mesurée Zmesuré pour un récipient R de 50 centilitres contenant de l'eau (figure 12a) sera différente de l'impédance complexe mesurée Zmesuré pour un récipient R de 2 litres contenant de l'eau (figure 12b).

Ceci est dû au fait que l'impédance complexe mesurée Zmesuré correspond à l'impédance complexe équivalente Zéquivalent de l'ensemble des dipôles situés entre les armatures 45, 46 des moyens émetteurs/récepteurs de champ électromagnétique.

On a illustré aux figures 9a et 9b un dispositif comprenant un canal 20 de section droite de forme circulaire spécialement adapté à la mesure de l'impédance complexe du contenu d'une bouteille cylindrique de 2 litres, c'est-à-dire un canal 20 dont le diamètre de la section droite est légèrement supérieur au diamètre d'une bouteille cylindrique de 2 litres.

Tel qu'illustré à la figure 9a, lorsque l'on utilise ce dispositif avec un récipient R de 50 centilitres disposé dans le canal 20 de sorte que son axe longitudinal du récipient R soit sensiblement horizontal, l'impédance complexe mesurée Zmesuré est égale à la somme de l'impédance complexe de l'eau Z2 contenue dans le récipient R et des impédances complexes Z1 et Z3 de l'air situé entre les parois du récipient R et les armatures 45, 46.

Les impédances complexes Z1 et Z3 de l'air situé entre les parois du récipient R et les armatures 45, 46 sont considérées comme des impédances parasites qu'il convient de minimiser afin que l'impédance complexe mesurée soit sensiblement égale à l'impédance complexe du liquide contenu dans le récipient à analyser.

Tel qu'illustré à la figure 9b, lorsque l'on utilise ce dispositif avec un récipient de 2 litres pour lequel la section droite est spécialement adaptée, l'impédance complexe mesurée Zmesuré est sensiblement égale à l'impédance complexe de l'eau Z2 contenue dans le récipient R.

En effet, avec un récipient de 2 litres pour lequel la section droite est spécialement adaptée, les impédances parasites Z1 et Z3 deviennent négligeables du fait que les distances entre les parois du récipient R et les armatures 45, 46 sont faibles.

Les géométries carrée (ou rectangulaire) et en trou de serrure de la section droite présente l'avantage de rendre la mesure de l'impédance complexe indépendante du volume du récipient dans lequel le liquide à analyser est contenu.

En effet, ces géométries permettent de limiter la distance entre les parois du récipient R et les armatures 45, 46 des moyens émetteurs/récepteurs de champ électromagnétique quelque soit le volume du récipient R.

On a illustré aux figures 10a et 10b un dispositif selon la présente invention comprenant un canal 20 de section droite de forme carrée, dont les diagonales sont respectivement verticale et horizontale de sorte qu'une arête coïncide avec le point le plus bas du canal 20.

Dans le cas d'un récipient R de forme cylindrique placé dans le canal 20 de sorte que l'axe longitudinal du récipient R soit horizontal, le récipient R aura tendance à venir en contact avec les cloisons 86, 87 du canal 20 du fait de la gravité, comme illustré aux figures 10a et 10b.

Ainsi, la distance entre les parois du récipient et les armatures 45, 46 (qui sont très proche des cloisons 86, 87 du canal 20) est quasi nulle quelque soit le diamètre du récipient contenant le liquide à analyser, de sorte que les impédances parasites Z1 et Z3 de l'air situé entre les parois du récipient R et les armatures sont négligeables. L'impédance mesurée Zmesuré est sensiblement égale à l'impédance complexe du liquide contenu dans le récipient R quelque soit le volume du récipient R utilisé.

Tout comme pour un canal dont la section droite est carrée, une géométrie de section droite en forme de clé de serrure permet de minimiser la distance entre les parois du récipient contenant le liquide à analyser et les armatures du dispositif quelque soit le volume du récipient R utilisé, de sorte que la mesure de l'impédance complexe est indépendante du volume du récipient dans lequel le liquide à analyser est contenu. Ainsi, dans le cas d'un récipient cylindrique de 50 cl, celui-ci est positionné entre les excroissances inférieures de la section droite en forme de clé de serrure (la distance entre ces excroissances peut être prévu légèrement supérieur au diamètre d'une bouteille cylindrique de 50 centilitres de type standard). Dans le cas d'un récipient de 2 litres, celui-ci est positionné au niveau de la partie centrale cylindrique du canal en forme de clé de serrure.

Ainsi, le canal 20 du dispositif définit préférentiellement une concavité 22 dirigée vers le haut. Encore plus préférentiellement, la convergence des cloisons 86, 87 du canal 20 est déterminée de sorte que non seulement la distance entre le point le plus bas du canal 20 et le centre de gravité du récipient R augmente en fonction du volume du récipient R mais de plus le point de contact du récipient R sur les parois du canal 20 s'élève et la hauteur de la base du récipient par rapport au point le plus bas du canal 20, augmente également en fonction du volume du récipient R. Plus préférentiellement encore, la concavité 22 dirigée vers le haut est obtenue grâce à deux tronçons rectilignes de manière à minimiser l'effet des impédances parasites Z1 et Z3 de l'air situé entre les parois du récipient R et les cloisons 86, 87 du canal 20.

Le dispositif décrit précédemment permet de disposer de moyens d'investigation non destructifs pour déterminer la composition du contenu d'un récipient.

Pour améliorer la fiabilité du dispositif d'analyse, on propose d'intégrer à ce dispositif des moyens 53, 55 permettant l'obtention d'une donnée physique additionnelle relative à une caractéristique du récipient analysé.

Selon l'invention, les moyens permettant l'obtention d'une donnée physique additionnelle comprennent des moyens de mesure de la masse du récipient R analysé.

En effet, lorsque la capacité du récipient analysé est faible (i.e. inférieure à 200 mL), le dispositif décrit précédemment a tendance à sous-estimer l'impédance complexe du liquide contenu dans le récipient analysé, ce qui peut conduire à l'émission d'une fausse alarme.

Plus précisément, l'impédance complexe pour unité de volume d'un liquide mesuré dans un récipient de capacité par exemple 100 mL sera inférieure à l'impédance complexe pour unité de volume du même liquide mesuré dans un récipient de 2L.

II en va de même lorsque un récipient de forme carré est placé dans un canal de section droite carrée. Plus précisément, l'impédance complexe mesurée d'un liquide contenu dans un récipient de section carrée de 1 L sera supérieure à l'impédance complexe mesurée du même liquide contenu dans un récipient de cylindrique.

Ceci tient au fait que dans les deux cas, les parois du récipient (de section carré, ou de petite capacité) coopèrent différemment avec les parois du canal.

On propose donc, pour augmenter la fiabilité du dispositif décrit précédemment, de procurer aux moyens d'analyse 50 une donnée additionnelle en plus de l'impédance complexe mesurée.

Cette donnée additionnelle est la masse du récipient avec son contenu.

Pour mesurer la masse du récipient et du liquide qu'il contient, le dispositif comprend un capteur gravimétrique 53.

Préférentiellement, le capteur gravimétrique 53 est disposé intégré au canal 20.

Plus précisément, le capteur gravimétrique est disposé sous la partie inférieure (ou fond 22) du canal 20. Ceci permet de limiter l'encombrement du dispositif.

Le dispositif fonctionne alors comme suit.

La tare du dispositif est mesurée périodiquement. Plus précisément, lorsque aucun récipient n'est introduit dans le canal 20, le capteur gravimétrique 53 mesure la masse de la partie inférieure 22 du canal 20. Cette tare mesurée est envoyée aux moyens 50.

La présence d'un récipient dans le canal 20 est détectée :
- soit par le capteur 52,
- soit par les moyens 50.

Dans le cas où la présence d'un récipient est détectée par les moyens 50, cette détection s'effectue comme suit. L'utilisateur introduit un récipient sur la partie inférieure 22 du canal 20. L'impédance complexe des moyens émetteur/récepteur est influencée par la charge constituée par le récipient R et son contenu. Les moyens d'analyse 50 détectent cette modification d'impédance complexe, et émette un signal indiquant la présence d'un récipient à analyser pour interrompre la mise à jour périodique de la tare du dispositif.

Le capteur gravimétrique 53 mesures la masse du récipient R et de son contenu et envoi un signal représentatif de la masse mesurée aux moyens d'analyse 50.

Les moyens d'analyse 50 associent la masse mesurée à l'impédance complexe mesurée pour le récipient R analysé.

Plus précisément, la masse mesurée est utilisée pour corriger l'amplitude de l'impédance complexe mesurée.

L'impédance complexe ainsi corrigée est ensuite comparée à des valeurs de référence pour la détermination de la nature du liquide contenu dans le récipient R.

Selon l'invention, les moyens permettant l'obtention d'une donnée physique additionnelle comprennent des moyens de saisie 55 illustrés aux figures 2 et 11.

Les moyens de saisie 55 peuvent permettre la saisie de données additionnelles relatives au récipient analysé.

Grâce à ces données additionnelles, la sélectivité du dispositif peut être augmentée.

En effet, la connaissance de données additionnelles permet de réduire la fenêtre d'acceptation sur l'impédance complexe mesurée. Sans données additionnelles la fenêtre d'acceptation doit être suffisamment large pour prendre en compte la variabilité de facteurs physiques relatifs aux différents types de récipient susceptible d'être analysés tel que :
- le matériau constituant les parois du récipient,
- l'épaisseur des parois du récipient,
- la capacité (ou volume) du récipient.

Le dispositif peut donc comprendre des moyens de saisie 55 pour la saisie de données additionnelles relatives au récipient analysé.

Afin de faciliter l'utilisation du dispositif, les moyens d'analyse 50 proposent des questions affichées sur des moyens d'affichage 59, ainsi qu'une liste de réponses possibles.

Grâce aux moyens de saisie 55, l'utilisateur sélectionne, en fonction du récipient analysé, la réponse la plus appropriée parmi la liste de réponses proposées.

Les données additionnelles que l'utilisateur doit saisir peuvent être la capacité (i.e. volume) du récipient et/ou le matériau constituant les parois du récipient et/ou l'épaisseur des parois du récipient.

Avantageusement, les moyens d'analyse 50 affichent des questions relatives au récipient analysé uniquement lorsque la saisie de données additionnelles relative au récipient analysé est nécessaire pour déterminer la nature du liquide contenu dans le récipient analysé.

Dans ce cas, les moyens (50) fournissent une information relative à la nature du contenu du récipient en fonction de l'impédance complexe mesurée et de la (ou des) donnée(s) saisie(s) par l'utilisateur sur les moyens de saisie 55.

Par exemple, lorsque l'impédance complexe mesurée s'écarte des valeurs de référence, les moyens d'analyse 50 commandent à l'utilisateur (par l'intermédiaire des moyens d'affichage 59) la saisie, sur les moyens de saisie 55 des données additionnelles.

Selon l'invention les moyens permettant l'obtention d'une donnée physique additionnelle comprennent des moyens de mesure de la masse d'une part, et des moyens de saisie d'autre part.

Bien entendu la présente invention n'est pas limitée aux modes de réalisation particuliers qui viennent d'être décrits mais s'étend à toute variante conforme à son esprit.

On notera par ailleurs que, dans le cadre de la présente invention, les capteurs 40 sont de préférence adaptés pour couvrir au moins une partie substantielle des récipients, voire la totalité de ceux-ci. Ceci garantit un haut niveau de sécurité dans l'analyse, puisque ceci permet d'analyser l'intégralité du contenu des récipients et non pas seulement une partie de ceux-ci.

Lorsqu'il est prévu un seul transducteur, celui-ci est simultanément ou successivement émetteur et récepteur.

Lorsqu'il est prévu plusieurs transducteurs, toutes les combinaisons sont possibles, c'est-à-dire que ces transducteurs peuvent être simultanément ou successivement émetteur et/ou récepteur.

Selon une autre caractéristique avantageuse, le dispositif d'analyse conforme à la présente invention comprend en outre un ensemble détecteur de rayonnement ionisant ou radioactif. Cet ensemble est destiné à détecter la présence éventuelle de traces de produits radioactifs dans le récipient analysé.

L'ensemble détecteur de rayonnement ionisant ou radioactif peut faire l'objet de nombreux modes de réalisation. II peut être formé de toutes structures connues de l'homme de l'art, en particulier toute structure apte à convertir un rayon ionisant détecté, en un signal électrique exploitable. II peut s'agir par exemple et non limitativement d'un détecteur de type Geiger comprenant un tube ou chambre qui loge un gaz dont la composition est choisie pour générer une décharge ionisante lors de la détection d'un rayonnement actif, et de là une impulsion électrique. II peut également s'agir d'un détecteur à scintillateur apte à convertir l'énergie détectée en scintillations lumineuses converties ensuite en signal électrique par un réseau de photomultiplicateurs. De nombreux scintillateurs ont été proposés à cet effet, par exemple à base de iodure de sodium, de iodure de césium ou encore de germanate de bismuth.

L'ensemble détecteur de rayonnement ionisant est placé en tout lieu approprié et de préférence à proximité immédiate des parois de la cavité 20, sur l'extérieur de celle-ci. On a représenté sur la figure 8, sous la référence 100, 110, une localisation a priori optimale de cet ensemble, sous la cavité 20, contre les deux parois composant le dièdre inférieur de la cavité 20.

L'ensemble détecteur de rayonnement ionisant 100, 110 est adapté pour travailler en temps masqué, en parallèle du dispositif de mesure d'impédance complexe précédemment décrit. L'ensemble détecteur de rayonnement ionisant 100, 110 est piloté et mis en service par tous moyens appropriés détectant la présence d'un récipient dans la cavité. De préférence, mais non limitativement, l'ensemble détecteur de rayonnement ionisant est ainsi initié par un signal prélevé sur la chaîne de mesure d'impédance complexe et représentatif de la présence d'un tel récipient dans le canal 20.

On a décrit précédemment plusieurs modes de réalisation de moyens 40 formant émetteurs/récepteurs de champ électromagnétique. Dans le cadre de la présente invention, il est de préférence prévu des moyens permettant de modifier la configuration des moyens formant émetteurs et des moyens formant récepteurs, afin d'enrichir les informations disponibles, par exemple sur le volume du récipient analysé.

On a en particulier illustré sur la figure 7 une variante de réalisation selon laquelle les moyens 40 comprennent quatre armatures capacitive 45, 46, 47 et 48 disposées respectivement sur l'extérieur de chacune des quatre faces d'une section carrée du canal 20. Dans ce contexte, il est de préférence prévu des moyens de commutation au sein du réseau de mesure 56, pour modifier la configuration des moyens 40 de sorte que dans une première configuration l'une des deux armatures inférieures 46 ou 48 forme un émetteur tandis que l'autre armature inférieure 48 ou 46 forme un récepteur, et une seconde configuration dans laquelle les deux armatures inférieures 46 et 48 forment des émetteurs tandis que les deux armatures supérieures 45 et 47 forment des récepteurs, ou inversement.

## Revendications

1. Dispositif d'analyse de la composition du contenu d'un récipient comprenant :
- des moyens (40) émetteurs/récepteurs d'un champ électromagnétique à au moins plusieurs fréquences comprises dans une plage de fréquences déterminée, lesdits moyens (40) émetteurs/récepteurs comprenant au moins un transducteur capacitif (45,46),
- des moyens support (22) d'un récipient (R) dont le contenu doit être analysé, adaptés pour assurer un positionnement précis relatif entre les moyens émetteurs/récepteurs (40) et le récipient (R),
- des moyens aptes à mesurer l'impédance complexe des moyens émetteurs/récepteurs influencée par la charge constituée par le récipient et son contenu, représentative des caractéristiques diélectriques complexes du récipient et de son contenu,
- des moyens (53, 55) pour l'obtention de données physiques additionnelles relatives à des caractéristiques du récipient (R), les données physiques additionnelles comprenant :
o la masse du récipient (R) et de son contenu, et
o le matériau constituant les parois du récipient (R), le matériau étant choisi parmi le verre et le plastique,
les moyens (53, 55) pour l'obtention de données physiques additionnelles comprenant des moyens de mesure de la masse et des moyens de saisie (55) pour la saisie d'au moins une des données physiques additionnelles,
- des moyens (50) aptes à fournir une information relative à la nature du contenu dudit récipient (R) en fonction de l'impédance complexe mesurée et des données physiques additionnelles.

2. Dispositif selon la revendication 1, **caractérisé en ce que** les moyens (53, 55) pour l'obtention des données physiques additionnelles comprennent un capteur gravimétrique (53) pour la mesure de la masse du récipient (R) et de son contenu.

3. Dispositif selon la revendication 2, **caractérisé par le fait que** le capteur gravimétrique (53) est disposé sous les moyens (22) support du récipient (R).

4. Dispositif selon l'une des revendications 2 ou 3, **caractérisé par le fait que** la tare du dispositif est mesurée périodiquement par le capteur gravimétrique (53) lorsqu'aucun récipient (R) n'est introduit dans le support (22).

5. Dispositif selon l'une des revendications 1 à 4, **caractérisé par le fait que** la présence d'un récipient (R) sur le support (22) est détectée par les moyens (50) aptes à mesurer l'impédance complexe des moyens émetteurs/récepteurs (40).

6. Dispositif selon l'une des revendications 1 à 5, **caractérisé par le fait que** les données physiques additionnelles comprennent en outre la capacité du récipient (R) et/ou l'épaisseur des parois du récipient (R).

7. Dispositif selon la revendication 1, **caractérisé par le fait que** la donnée physique additionnelle est saisie grâce aux moyens de saisie (55) en sélectionnant des caractéristiques de récipient parmi une liste prédéterminée de caractéristiques de récipients.

## Patentansprüche

1. Vorrichtung zur Analyse der Zusammensetzung des Inhalts von einem Gefäß, enthaltend:
- Mittel (40) zum Senden/Empfangen eines elektromagnetischen Feldes bei wenigstens einigen Frequenzen, die in einem bestimmten Frequenzbereich enthalten sind, wobei die Sende-/Empfangsmittel (40) zumindest einen kapazitiven Wandler (45, 46) aufweisen,
- Abstützmittel (22) zum Abstützen eines Gefäßes (R), dessen Inhalt analysiert werden soll, die darauf abgestimmt sind, eine genaue Relativpositionierung zwischen den Sende- /Empfangsmitteln (40) und dem Gefäß (R) zu gewährleisten,
- Mittel, die dazu geeignet sind, die komplexe Impedanz der Sende-/Empfangsmittel zu messen, die von der aus dem Gefäß und dessen Inhalt bestehenden Last beeinflusst wird, die repräsentativ ist für die komplexen, dielektrischen Eigenschaften von dem Gefäß und seinem Inhalt,
- Mittel (53, 55) zum Erhalt von physikalischen Zusatzangaben bezüglich der Eigenschaften des Gefäßes (R), wobei die physikalischen Zusatzangaben enthalten:
- die Masse von dem Gefäß (R) und seinem Inhalt, und
- das Material, aus dem die Wände des Gefäßes (R) bestehen, wobei das Material aus Glas und Kunststoff ausgewählt ist,
wobei die Mittel (53, 55) zum Erhalt von physikalischen Zusatzangaben Mittel zum Messen der Masse und Erfassungsmittel (55) zum Erfassen zumindest einer der physikalischen Zusatzangaben umfasst,
- Mittel (50), die dazu geeignet sind, eine Information bezüglich der Beschaffenheit des Inhalts von dem Gefäß (R) in Abhängigkeit von der gemessenen, komplexen Impedanz und der physikalischen Zusatzangaben bereitzustellen.

2. Vorrichtung nach Anspruch 1, **dadurch gekennzeichnet, dass** die Mittel (53, 55) zum Erhalt der physikalischen Zusatzangaben einen gravimetrischen Sensor (53) zum Messen der Masse von dem Gefäß (R) und seinem Inhalt aufweisen.

3. Vorrichtung nach Anspruch 2, **dadurch gekennzeichnet, dass** der gravimetrische Sensor (53) unter den Abstützmitteln (22) zum Abstützen des Gefäßes (R) angeordnet ist.

4. Vorrichtung nach einem der Ansprüche 2 oder 3, **dadurch gekennzeichnet, dass** dann, wenn kein Gefäß (R) in das Abstützmittel (22) eingeführt ist, das Leergewicht der Vorrichtung periodisch von dem gravimetrischen Sensor (53) gemessen wird.

5. Vorrichtung nach einem der Ansprüche 1 bis 4, **dadurch gekennzeichnet, dass** das Vorhandensein eines Gefäßes (R) am Abstützmittel (22) von den Mitteln (50) erfasst wird, die dazu geeignet sind, die komplexe Impedanz der Sende-/Empfangsmittel (40) zu messen.

6. Vorrichtung nach einem der Ansprüche 1 bis 5, **dadurch gekennzeichnet, dass** die physikalischen Zusatzangaben ferner das Fassungsvermögen des Gefäßes (R) und/oder die Dicke der Wände des Gefäßes (R) umfassen.

7. Vorrichtung nach Anspruch 1, **dadurch gekennzeichnet, dass** die physikalische Zusatzangabe von den Erfassungsmitteln (55) erfasst wird, indem Gefäßeigenschaften aus einer vorbestimmten Liste von Gefäßeigenschaften ausgewählt werden.

## Claims

1. A device for analyzing the composition of the contents of a container comprising:
- electromagnetic field emitting/receiving means (40) at at least several frequencies comprised in a determined range of frequencies, said emitting/receiving means (40) including at least one capacitive transducer (45, 46),
- means (22) supporting a container (R), the contents of which have to be analyzed, suitable for ensuring accurate relative positioning between the emitting/receiving means (40) and the container (R),
- means capable of measuring the complex impedance of the emitting/receiving means influenced by the load formed by the container and its contents, representative of the complex dielectric characteristics of the container and its contents,
- means (53, 55) for obtaining additional physical data relating to a characteristic of the container (R), the additional physical data including:
o the mass of the container (R) and its contents, and
o the material constituting the walls of the container (R), the material being selected from glass or plastic,
the means (53, 55) for obtaining additional physical data including means for measuring mass and means (55) for inputting at least one of the additional physical data,
- means (50) capable of providing information relating to the nature of the contents of said container (R) depending on the measured complex impedance and on the additional physical data.

2. The device of claim 1, **characterized in that** the means (53, 55) for obtaining the additional physical data comprise a gravimetric sensor (53) for measuring the mass of the container (R) and of its contents.

3. The device of claim 2, **characterized by** the fact that the gravimetric sensor (53) is positioned under the means (22) for supporting the container (R).

4. The device of one of claims 2 or 3, **characterized by** the fact that the tare of the device is periodically measured by the gravimetric sensor (53) when no container (R) is introduced into the support (22).

5. The device of one of claims 1 to 4, **characterized by** the fact that the presence of a container (R) on the support (22) is detected by the means (50) capable of measuring the complex impedance of the emitting/receiving means (40).

6. The device of one of claims 1 to 5, **characterized by** the fact that the additional physical data also comprise the capacity of the container (R) and/or the thickness of the walls of the container (R).

7. The device of claim 1, **characterized by** the fact that the additional physical datum is inputted with the help of input means (55) by selecting characteristics of containers from a predetermined list of characteristics of containers.
